# EUROPÄISCHE PATENTSCHRIFT

(11) **EP 2 321 623 B1**
(45) Veröffentlichungstag und Bekanntmachung des Hinweises auf die Patenterteilung: **25.01.2017**
(21) Anmeldenummer: 09778352.6
(22) Anmeldetag: 04.09.2009
(51) Int. Cl.: B25J 13/08, B25J 19/00, G01L 5/28

(54) **VERFAHREN ZUM ÜBERPRÜFEN EINER BREMSE EINES ROBOTERS**
METHOD FOR CHECKING A BRAKE OF A ROBOT
PROCÉDÉ POUR CONTRÔLER UN FREIN D'UN ROBOT

(30) Priorität: 08.09.2008 DE 102008041866
(43) Veröffentlichungstag der Anmeldung: 18.05.2011
(73) Patentinhaber: KUKA Roboter GmbH, 86165 Augsburg (DE)
(72) Erfinder: UEBERLE, Marc-Walter, 86316 Friedberg (DE); ORTMAIER, Tobias, 30966 Hemmingen (DE)
(74) Vertreter: Patentanwälte Funk & Böss GbR
(86) Internationale Anmeldenummer: PCT/EP2009/006455
(87) Internationale Veröffentlichungsnummer: WO 2010/025944

(56) Entgegenhaltungen:
- EP-A- 0 643 290
- EP-A- 0 924 583
- EP-A- 1 696 216
- EP-A- 1 710 549
- EP-A- 1 806 837
- US-A1- 2002 069 697
- US-B1- 6 778 867
- TAN ET AL: "Braking responses of inertia/load by using an electro-rheological (ER) brake" MECHATRONICS, PERGAMON PRESS, OXFORD, GB, Bd. 17, Nr. 6, 9. Juni 2007 (2007-06-09), Seiten 277-289, XP022110170 ISSN: 0957-4158
- MUNIR S ET AL: "Experimental evaluation of a new braking system for use in passive haptic displays" AMERICAN CONTROL CONFERENCE, 1999. PROCEEDINGS OF THE 1999 SAN DIEGO, CA, USA 2-4 JUNE 1999, PISCATAWAY, NJ, USA,IEEE, US, Bd. 6, 2. Juni 1999 (1999-06-02), Seiten 4456-4460, XP010345154 ISBN: 978-0-7803-4990-2

## Beschreibung

Die Erfindung betrifft ein Verfahren zum Überprüfen einer Bremse eines Roboters.

Roboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Roboter weisen im Wesentlichen einen Roboterarm mit mehreren Achsen und Hebeln auf, die von Antrieben bewegt werden. Die Antriebe sind z.B. elektrische Antriebe.

Um die Bewegung des Roboters zu stoppen, weisen diese in der Regel Bremsen auf. Um ein potenzielles Versagen der Bremsen eines Elektromotors eines Roboters, hervorgerufen z.B. durch Verschleiß oder Verschmutzung, frühzeitig zu erkennen, offenbart die EP 1 215 475 B1 die Bremse des Elektromotors in einem drehzahlgeregelten Betrieb für kurze Zeit zum Einfallen zu bringen und mindestens während dieser Zeit den Motorstrom des Elektromotors zu messen, um das Bremsmoment der Bremse des Elektromotors zu bestimmen. Für dieses Verfahren ist es jedoch nötig, dass der Elektromotor ein relativ großes, das Bremsmoment übersteigendes Motormoment aufbringt. Somit ist dieses Verfahren nicht geeignet, wenn das installierte Bremsmoment größer als das Motormoment ist.

K.P. Tan et. al. offenbaren in "Braking response of inertia/load by using a electro-rheological (ER) brake", Mecatronics, Pergamon Press, Oxford, GB, Bd. 17, Nr. 6, 9. Juni 2007, Seiten 277-289, ein Verfahren zum Überprüfen einer für einen Roboter verwendbare Bremse. Diese wird als solche im nicht eingebauten Zustand getestet.

S. Munir et. al. offenbaren in "Experimantal Evaluation of a New Braking System for Use in Passive Haptic Displays", Proceedings of the American Control Conference, San Diego, USA, Juni 1999, Seiten 4456-4460 ein weiteres Verfahren zum Überprüfen einer für einen Roboter verwendbare Bremse, die als solche im nicht eingebauten Zustand getestet wird.

Die US 2002/0069697 A1 offenbart ein Verfahren zum Überprüfen einer Bremse eines Roboters, im Rahmen dessen in einer Messsequenz im Drehzahl geregelten Betrieb eines Elektromotors des Roboters eine Bremse de Roboters für kurze Zeit zum Einfallen gebracht wird, über diese Zeit ein Motorstrom gemessen und aufgrund der so gewonnene Messdaten das Bremsmoment bestimmt wird.

Die EP 1 696 216 A1 offenbart einen Roboter mit einer Mehrzahl von Achsen, mit einem einer der Achsen zugeordneten Antrieb und einen dieser Achse zugeordneten Drehmoment-Sensor, der eingerichtet ist, das auf diese Achse wirkende Drehmoment zu ermitteln.

Die Aufgabe der vorliegenden Erfindung ist es daher, ein flexibleres Verfahren zum Überprüfen einer Bremse eines Roboters anzugeben.

Die Aufgabe der Erfindung wird gelöst durch ein Verfahren zum Überprüfen einer Bremse eines Roboters, aufweisend
- Betreiben eines eine Mehrzahl von Achsen aufweisenden Roboters, wobei der Roboter einen einer der Achsen der Mehrzahl von Achsen zugeordneten Antrieb, eine dieser Achse zugeordnete Bremse, die eingerichtet ist, eine Bewegung dieser Achse zumindest zu verringern, und einen dieser Achse zugeordneten Drehmoment-Sensor aufweist, der eingerichtet ist, das auf diese Achse wirkende Drehmoment zu ermitteln,
- Aktivieren der Bremse,
- Ermitteln des auf die Achse wirkenden Drehmoments mittels des Drehmoment-Sensors bei aktivierter Bremse und
- Beurteilen der Funktionstüchtigkeit der Bremse aufgrund eines Auswertens des mittels des Drehmoment-Sensors ermittelten Drehmoments.

Roboter weisen mehrere Achsen auf, die mittels Antrieben, z.B. elektrischen Antrieben, bewegt werden können. Roboter können außerdem einen oder mehrere Drehmoment-Sensoren aufweisen, die bei konventionellen Robotern z. B. zur Regelung und zur Interaktion mit der Umwelt eingesetzt werden. Die Drehmoment-Sensoren sind den Achsen zugeordnet und ermitteln das der relevanten Achse zugeordnete Drehmoment.

Erfindungsgemäß wird solch ein Drehmoment-Sensor für ein Ü-berprüfen einer Bremse des Roboters verwendet, indem das mittels des Drehmoment-Sensors ermittelte Drehmoment zum Beurteilen der Funktionstüchtigkeit einer Bremse des die Mehrzahl von Achsen aufweisenden Roboters verwendet wird. Die Bremse ist vorgesehen, eine Bewegung einer der Achsen der Mehrzahl von Achsen zumindest zu verringern, und der Drehmoment-Sensor ist eingerichtet, das auf diese Achse wirkende Drehmoment zu ermitteln.

Der Achse ist ferner der Antrieb zugeordnet, der z.B. ein elektrischer Antrieb sein kann, der wiederum einen elektrischen Motor und gegebenenfalls eine den elektrischen Motor ansteuernde Leistungselektronik aufweist. Im Betrieb des Roboters beaufschlagt der Antrieb ein Antrieb-Drehmoment auf die Achse, damit diese sich z.B. mit einer insbesondere vorgegebenen Geschwindigkeit bewegt oder die Achse in einer insbesondere vorbestimmten Position hält oder entlang einer vorgegebenen Trajektorie bewegt.

Das mittels des Drehmoment-Sensors ermittelte Drehmoment kann z.B. für einen statischen Test, d.h. zum Ermitteln eines Losbrechmoments der Bremse, oder für einen dynamischen Test, bei dem sich die relevante Achse des Roboters bewegt, verwendet werden.

Gemäß dem erfindungsgemäßen Verfahren wird der Roboter z.B. in einem vorbestimmten Betriebszustand betrieben und die Bremse aktiviert. Dadurch wirkt auf die Achse ein Drehmoment, das vom Drehmoment-Sensor ermittelt wird. Eine Analyse dieses Drehmoments oder eines dem Drehmoment zugeordneten Drehmomentprofils erlaubt daraufhin einen Rückschluss auf das von der Bremse aufgebrachte Brems-Drehmoment und somit auf die Funktionstüchtigkeit der Bremse.

Das ermittelte Drehmoment kann beispielsweise analysiert werden, indem es mit einem dem vorgegebenen Betriebszustand zugeordneten Soll-Drehmoment verglichen wird, das bei funktionstüchtiger Bremse wirkt. Das Soll-Drehmoment kann z.B. mittels einer früheren Messung ermittelt oder aufgrund einer modellbasierten Abschätzung ermittelt worden sein.

Gemäß einer Ausführungsform des erfindungsgemäßen Verfahrens wird der Roboter in einem gesteuerten oder geregelten Betriebszustand als z.B. den vorgegebenen Betriebszustand betrieben, wobei insbesondere aufgrund des vorgegebenen Betriebszustands die Achse eine vorgegebene Position aufweist, sich mit einer vorgegebenen Geschwindigkeit oder sich entlang einer vorgegebenen Trajektorie bewegt.

Anschließend wird nach einer Variante des erfindungsgemäßen Verfahrens der der Achse zugeordnete Antrieb abgeschaltet. Das vom Drehmoment-Sensor ermittelte Drehmoment steht mit dem von der Bremse aufgebrachten Brems-Drehmoment im Zusammenhang, so dass aufgrund einer Analyse des mittels des Drehmoment-Sensors ermittelten Drehmoments ein Rückschluss auf die Funktionstüchtigkeit der Bremse möglich ist. Die Analyse des mittels des Drehmoment-Sensors ermittelten Drehmoments erfolgt z.B. durch einen Vergleich mit dem obenstehend erwähnten und vorab ermittelten Vergleichs- bzw. Soll-Drehmomentprofils. Die Wahl geeigneter Geschwindigkeiten, mit der die Achse während des vorgegebenen Betriebszustands betrieben wird, erlaubt mit dieser Variante des erfindungsgemäßen Verfahrens sowohl einen Rückschluss auf statische als auch auf dynamische Brems-Drehmomente der Bremse mittels der Analyse des mittels des Drehmoment-Sensors ermittelten Drehmoments. Alternativ kann auch ein vom Antrieb aufzubringendes Antrieb-Drehmoment während des Ermittelns des Bremsmoments eingestellt werden. Dadurch wird die Achse, insbesondere ein eventuell der Achse zugeordnetes Getriebe während der Funktionsprüfung entlastet.

Gemäß einer weiteren Ausführungsform des erfindungsgemäßen Verfahrens weist dieses folgende Verfahrensschritte auf:
- mechanisches Verhindern eines Bewegens der Achse mit Mitteln unabhängig von der Bremse,
- Aktivieren der Bremse
- Erzeugen eines Antrieb-Drehmoments mittels des Antriebs größer als ein von der Bremse aufzubringendes Brems-Drehmoment und
- Beurteilen der Funktionstüchtigkeit der Bremse durch Auswerten des mittels des Drehmoment-Sensors ermittelten Drehmoments und des Antrieb-Drehmoments.

Gemäß dieser Variante des erfindungsgemäßen Verfahrens kann das Losbrechmoment der Bremse ermittelt werden, indem einerseits der Antrieb ein Antrieb-Drehmoment erzeugt, das größer als das von der Bremse aufgebrachte Brems-Drehmoment ist. Außerdem wird ein Bewegen der Achse insbesondere hervorgerufen durch das Antrieb-Drehmoment mechanisch verhindert, indem die Achse z.B. mechanisch arretiert wird oder die Achse für diese Variante des erfindungsgemäßen Verfahrens in einen für die Achse vorgesehenen mechanischen Endanschlag des Roboters gebracht wird, so dass der Antrieb die Achse nicht weiter bewegen kann. Dadurch, dass das vom Antrieb aufgebrachte Antrieb-Drehmoment größer als das von der Bremse aufzubringende Brems-Drehmoment ist, wirkt auf die Achse ein Abtriebmoment, das wiederum der Drehmoment-Sensor ermittelt. Aufgrund des Auswertens des Antrieb-Drehmoments und des mittels des Drehmoment-Sensors ermittelten Drehmoments kann wiederum ein Rückschluss über das Brems-Drehmoment gezogen und somit die Funktionstüchtigkeit der Bremse beurteilt werden. Das von der Bremse aufgebrachte Brems-Drehmoment entspricht je nach mechanischem Verhindern der Bewegung der Achse dem Antrieb-Drehmoment weniger dem mittels des Drehmoment-Sensors ermittelten Drehmoments. Eventuell muss noch ein aufgrund der Schwerkraft auf die Achse wirkendes Drehmoment berücksichtigt werden. Das vom Antrieb aufgebrachte Antrieb-Drehmoment kann z.B. über einen elektrischen Strom eines den Antrieb aufweisenden Elektromotors bestimmt werden, wenn es sich bei dem Antrieb um einen elektrischen Antrieb handelt. Aufgrund dieser Variante des erfindungsgemäßen Verfahrens bleibt die Achse während der Funktionsprüfung der Bremse in Ruhe, was keinen oder zumindest einen relativ geringen Verschleiß der Bremse zur Folge hat.

Gemäß einer weiteren Ausführungsform des erfindungsgemäßen Verfahrens werden folgende Verfahrensschritte durchgeführt:
- Aktivieren der Bremse während eines Stillstands der Achse,
- Erhöhen des vom Antrieb aufzubringenden Antrieb-Drehmoments bis zu einem vorgegebenen Antrieb-Drehmoment und
- Erkennen, dass die Bremse funktionsuntüchtig ist, wenn vor Erreichen des vorgegebenen Antrieb-Drehmoments der Drehmoment-Sensor eine Änderung des Drehmoments erkennt.

Gemäß dieser Variante ist der Roboter in Ruhe und die Bremse ist geschlossen (aktiviert). Der Drehmoment-Sensor ermittelt in diesem Betriebszustand kein oder ein relativ geringes, z.B. aufgrund der Schwerkraft erzeugtes Drehmoment auf die Achse. Anschließend wird das vom Antrieb aufzubringende Antrieb-Drehmoment z.B. schrittweise oder kontinuierlich erhöht, bis der Antrieb das vorgegebene Antrieb-Drehmoment erreicht. Das vorgegebene Antrieb-Drehmoment entspricht insbesondere einem Soll-Brems-Drehmoment, das die Bremse mindestens aufbringen soll, wenn sie funktionstüchtig ist. Ermittelt der Drehmoment-Sensor während des Erhöhens des Antrieb-Drehmoments keine Änderung des Drehmoments, so ist das Brems-Drehmoment größer als das Antrieb-Drehmoment und die Bremse ist noch funktionstüchtig. Ermittelt dagegen der Drehmoment-Sensor eine Änderung des Drehmoments bevor der Antrieb das vorgegebene Antrieb-Drehmoment erreicht, so kann auf eine Beeinträchtigung der Funktionstüchtigkeit der Bremse geschlossen werden.

Zusätzlich ist es auch möglich, das vom Antrieb aufzubringenden Antrieb-Drehmoment weiter zu erhöhen, nachdem der Antrieb das vorgegebene Antrieb-Drehmoment erreicht hat. Dann kann ein Beschleunigungsmoment aufgrund des mittels des Drehmoment-Sensors ermittelten Drehmoments der Achse ermittelt werden.

Ausführungsbeispiele der Erfindung sind exemplarisch in den beigefügten schematischen Zeichnungen dargestellt. Es zeigen:
- Fig. 1: einen Roboter mit mehreren Achsen,
- Fig. 2: eine der Achsen des Roboters,
- Figuren 3, 4: Flussdiagramme, die verschiedenen Verfahren zum Überprüfen der Funktionstüchtigkeit einer der Bremsen des Roboters veranschaulichen,
- Fig. 5: die in der Fig. 2 dargestellte Achse für einen alternativen Betriebszustand des Roboters und
- Fig. 6: ein weiteres Flussdiagramm, das ein alternatives Verfahren zum Überprüfen der Funktionstüchtigkeit der Bremse veranschaulicht.

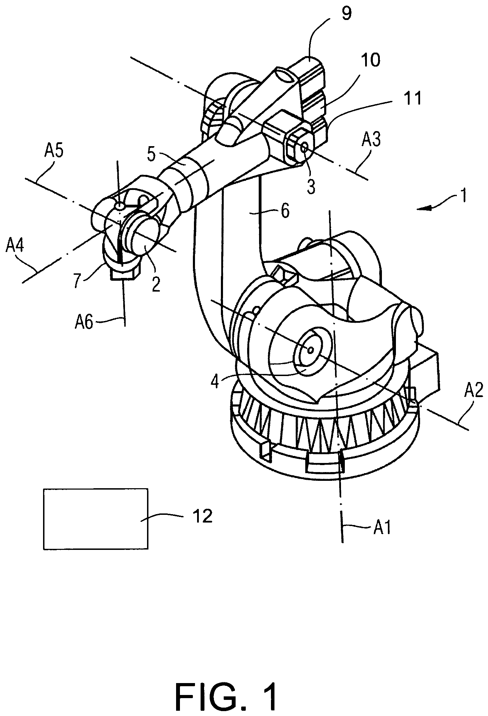

Die Fig. 1 zeigt einen Roboter 1 mit einer Kinematik für Bewegungen in beispielsweise sechs Freiheitsgraden. Der Roboter 1 weist in allgemein bekannter Weise Gelenke 2 bis 4, Hebel 5, 6, sechs Bewegungsachsen A1 bis A6 und einen Flansch 7 auf, an dem ein nicht näher dargestellter Effektor, z.B. ein Werkzeug, befestigt sein kann.

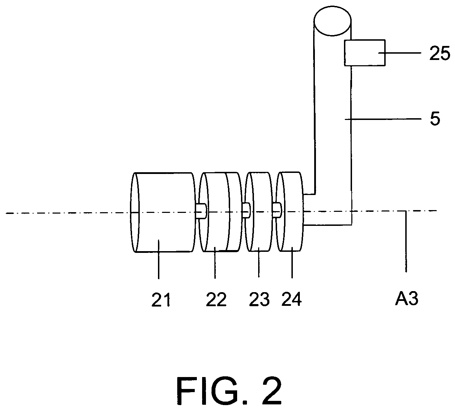

Jede der Bewegungsachsen A1 bis A6 wird von einem nicht näher dargestellten Antrieb bewegt. Die Antriebe umfassen beispielsweise jeweils einen elektrischen Motor 9-11, 21, wie es dem Fachmann allgemein bekannt ist. Die Fig. 2 zeigt den Hebel 5, der um die Achse A3 mittels des Motors 21 geschwenkt werden kann.

Im Falle des vorliegenden Ausführungsbeispiels weist der der Achse A3 zugeordnete elektrische Antrieb ein Getriebe 23 auf. Eine Bewegung des Hebels 5 bezüglich der Achse A3 kann ferner mit einer Bremse 22 abgebremst werden. Ein auf die Achse A3 wirkendes Drehmoment wird mit einem Drehmoment-Sensor 24 gemessen. Den restlichen Achsen A1, A2, A4-A6 kann ebenfalls jeweils ein Drehmoment-Sensor und eine Bremse zugeordnet sein.

Der Roboter 1 weist ferner einen Steuerrechner 12 auf, der mit den Antrieben des Roboters 1 in nicht dargestellter Weise verbunden ist und diese mittels eines auf dem Steuerrechner 12 laufenden Rechnerprogramms steuert, so dass der Flansch 7 des Roboters 1 eine vorgegebene Bewegung durchführt. Der Begriff "Steuern" soll auch den Begriff "Regeln" umfassen.

Des Weiteren sind im Falle des vorliegenden Ausführungsbeispiels auch der Drehmoment-Sensor 24 und die Bremse 22 mit dem Steuerrechner 12 verbunden, so dass der Steuerrechner 12 die Bewegung des Roboters 1 aufgrund von mit dem Drehmoment-Sensor 24 gemessenen Signalen steuern bzw. regeln und gegebenenfalls die Bremse aktivieren kann.

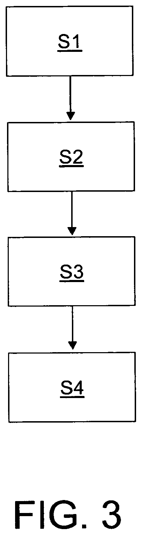

Um die Funktionstüchtigkeit der Bremse 22 zu überprüfen, wird im Falle des vorliegenden Ausführungsbeispiels folgender, mittels eines in der Fig. 3 dargestellten Flussdiagramms veranschaulichende Funktionsprüfung der Bremse 22 durchgeführt:
Zunächst wird der Roboter 1 in einem vorgegebenen gesteuerten oder geregelten Betriebszustand betrieben, in dem die Achse A3 einen vorgegebenen Bewegungszustand aufweist, Schritt S1 des Flussdiagramms der Fig. 3. Dies wird erreicht, indem der Steuerrechner 12 den elektrischen Motor 21 derart ansteuert, dass dieser ein Motor-Drehmoment erzeugt, so dass dieses die Achse A3 in den vorgegebenen Bewegungszustand überführt. Alternativ kann der Roboter 1 auch derart in einem gesteuerten oder geregelten Betriebszustand betrieben werden, so dass sich die Achse A3 mit einer vorgegebenen Geschwindigkeit bewegt, d.h. dass sich der Hebel 5 um die Achse A3 mit einer vorgegebenen Winkelgeschwindigkeit bewegt. Dies wird erreicht, indem der Steuerrechner 12 den elektrischen Motor 21 derart ansteuert, dass dieser ein Motor-Drehmoment erzeugt, so dass der Hebel 5 mit der vorgegebenen Winkelgeschwindigkeit um die Achse A3 schwenkt.

Befindet sich der Roboter 1 in diesem Betriebszustand, dann aktiviert der Steuerrechner 12 automatisch die Bremse 22, Schritt S2 des Flussdiagramms, und schaltet den Motor 21 ab, so dass dieser kein Motor-Drehmoment mehr erzeugt, Schritt S3 des Flussdiagramms.

In diesem Betriebszustand erzeugt der Drehmoment-Sensor 24 ein Signal, das dem auf die Achse A3 wirkenden Drehmoment entspricht. Dieses Signal wird dem Steuerrechner 12 zugeführt. Auf dem Steuerrechner 12 läuft wiederum ein Rechnerprogramm, das aufgrund des vom Drehmoment-Sensor 24 stammenden Signals das auf die Achse A3 wirkende Drehmoment auswertet, um einen Rückschluss auf den Zustand der Bremse 22 zu ziehen, Schritt S4 des Flussdiagramms.

Im Falle des vorliegenden Ausführungsbeispiels ist für diese Auswertung ein Referenz-Drehmomentprofil im Steuerrechner 12 gespeichert, das für die eben beschriebene Funktionsprüfung der Bremse 22 zu erwarten ist, wenn die Bremse 22 noch ausreichend funktionstüchtig ist. Aufgrund eines Vergleichs des mittels des Drehmoment-Sensors 24 im Rahmen der Funktionsprüfung ermittelten Drehmomentprofils mit dem Referenz-Drehmomentprofil wird es dem Steuerrechner 12 ermöglicht, mittels seines Rechnerprogramms die Bremse 22 zu überprüfen. Alternativ wird während des Bremsvorgangs das Referenz-Drehmomentprofil modellbasiert berechnet, wodurch kein bestimmter vorgegebener Betriebszustand nötig ist.

Das Referenz-Drehmomentprofil wurde z.B. während einer Vergleichsmessung mit einer funktionstüchtigen Bremse 22 erzeugt oder aufgrund einer modellbasierten Abschätzung ermittelt.

Für eine alternative Funktionsprüfung der Bremse 22 schaltet der Steuerrechner 12 nach Aktivieren der Bremse 22 nicht den Motor 21 ab, sondern betreibt diesen mit einem vorbestimmten Motor-Drehmoment, um beispielsweise das resultierende Brems-Drehmoment zu reduzieren. Dadurch ist es möglich, die mechanische Belastung z.B. des Getriebes 23 zu verringern. Für diese Funktionsprüfung kann das auf dem Steuerrechner 12 laufende Rechnerprogramm auch derart ausgeführt sein, dass dieses die Funktion der Bremse 22 nicht nur aufgrund der Auswertung des mittels des Drehmoment-Sensors 24 ermittelten Drehmomentprofils, sondern auch aufgrund des vom Motor 21 aufgebrachten Motor-Drehmoment ermittelt. Das Motor-Drehmoment kann z.B. aufgrund gemessener elektrischer Ströme des Motors 21 ermittelt werden.

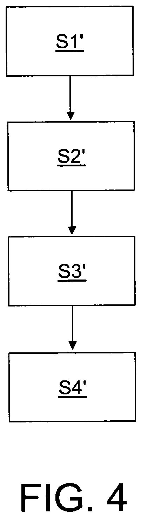

Die Figur 4 veranschaulicht eine alternative Ausführungsform einer Funktionsprüfung der Bremse 22, die im Falle des vorliegenden Ausführungsbeispiels folgendermaßen durchgeführt wird:
Zunächst steuert der Steuerrechner 12 die Motoren 9-11, 21 derart an, dass die Achse A3 bzw. der Hebel 5 in einen für die Achse A3 vorgesehenen mechanischen Endanschlag 25 des Roboters 1 gebracht wird, Schritt S1' des Flussdiagramms der Fig. 4. Dadurch wird mechanisch verhindert, dass sich die Achse A3 über den Endanschlag 25 hinaus bewegen kann, auch wenn der Motor 21 ein entsprechendes Motor-Drehmoment aufbringt.

Befindet sich die Achse A3 bzw. der Hebel 5 an ihrem bzw. seinem Endanschlag 25, dann aktiviert der Steuerrechner 12 die Bremse 22, Schritt S2' des Flussdiagramms der Fig. 4, und veranlasst den Motor 21, ein Motor-Drehmoment zu erzeugen, das größer als das von der Bremse 22 zu erwartende Brems-Drehmoment ist, wenn die Bremse 22 funktionstüchtig ist, Schritt S3' des Flussdiagramms der Fig. 4. Der Endanschlag 25 verhindert eine Bewegung der Achse A3 bzw. des Hebels 5 über den Endanschlag 25.

Anschließend berechnet das auf dem Steuerrechner 12 laufende Rechnerprogramm aufgrund des mittels des Drehmoment-Sensors 24 und des vom Motor 21 aufgebrachten Motor-Drehmoments das von der Bremse 22 erzeugte Brems-Drehmoment. Aufgrund einer im Steuerrechner 12 gespeicherten Information über das einer funktionstüchtigen Bremse 22 zugeordnete Brems-Drehmoment und einem Vergleich mit dem aktuell im Rahmen der Funktionsprüfung ermittelten Brems-Drehmoments der Bremse 22 kann der Steuerrechner 12 einen Rückschluss auf die Funktionstüchtigkeit der Bremse 22 ziehen, Schritt S4' des Flussdiagramms der Fig. 4.

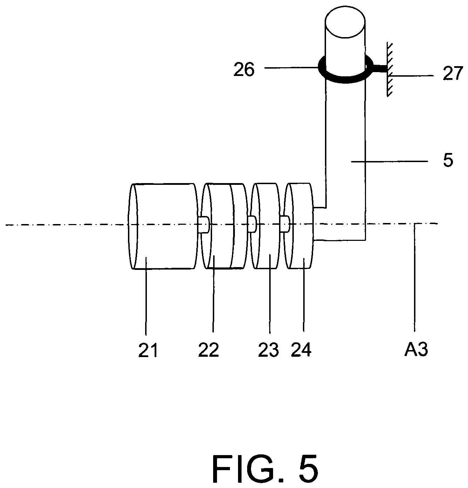

In dem in der Fig. 2 dargestellten Ausführungsbeispiel wird die Bewegung der Achse A3 durch den Endanschlag 25 verhindert. Die Fig. 5 zeigt eine Ausführungsform, bei der die Bewegung der Achse A3 bzw. des Hebels 5 durch ein Arretierung 26 realisiert wird, mittels derer der Hebel 5 z.B. an einer Wand 27 befestigt wird, um eine Bewegung der Achse A3 zu verhindern.

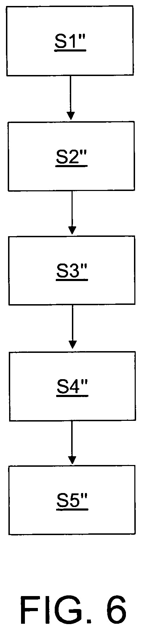

Die Figur 6 veranschaulicht eine weitere Ausführungsform einer Funktionsprüfung der Bremse 22, die im Falle des vorliegenden Ausführungsbeispiels folgendermaßen durchgeführt wird:
Zunächst wird der Roboter 1 in einem vorgegebenen Betriebszustand betrieben, in dem er in Ruhe ist, d.h. dass insbesondere die Achse A3 bzw. der Hebel 5 nicht bewegt werden, Schritt S1" des Flussdiagramms der Fig. 6. Außerdem ist die Bremse 22 geschlossen, Schritt S2" des Flussdiagramms der Fig. 6.

Anschließend steuert der Steuerrechner 12 den Motor 21 derart an, so dass dieser z.B. kontinuierlich oder schrittweise sein auf die Achse A3 wirkendes Motor-Drehmoment erhöht, bis dieser ein vorgegebenes Soll-Motor-Drehmoment erreicht, Schritt S3" des Flussdiagramms der Fig. 6. Das vorgegebene Soll-Motor-Drehmoment ist derart gewählt, dass sich die Achse A3 beim Erreichen dieses Motor-Drehmoments gerade noch nicht bewegt, wenn die Bremse 22 funktionstüchtig ist.

Ist die Bremse 22 funktionstüchtig, dann ändert sich das vom Drehmoment-Sensor 24 ermittelte Drehmoment nicht oder nur relativ wenig, während sich das Motor-Drehmoment erhöht. Ist die Bremse 22 dagegen nicht mehr funktionstüchtig, da sie z.B. nicht mehr das nötige Brems-Drehmoment aufbringen kann, dann ermittelt der Drehmoment-Sensor 24 eine relevante Änderung des auf die Achse A3 wirkenden Drehmoments. Somit ist es dem Steuerrechner 12 möglich, aufgrund eines Auswertens des mittels des Drehmoment-Sensors 24 ermittelten Drehmoments Rückschlüsse auf die Funktionstüchtigkeit der Bremse 22 zu ziehen, Schritt S4" des Flussdiagramms der Fig. 6.

Im Falle des vorliegenden Ausführungsbeispiels ist es noch vorgesehen, das vom Motor 21 aufgebrachte Motor-Drehmoment weiter zu erhöhen, nachdem dieser das Soll-Motor-Drehmoment erreicht hat, damit der Steuerrechner 12 mittels des vom Drehmoment-Sensor 24 ermittelten Drehmoments ein auf die Achse A3 wirkendes Beschleunigungsmoment berechnen kann, Schritt S5" des Flussdiagramms der Fig. 6.

## Patentansprüche

1. Verfahren zum Überprüfen einer Bremse eines Roboters, aufweisend
- Betreiben eines eine Mehrzahl von Achsen (A1-A6) aufweisenden Roboters (1), wobei der Roboter (1) einen einer der Achsen (A3) der Mehrzahl von Achsen (A1-A6) zugeordneten Antrieb (21), eine dieser Achse (A3) zugeordnete Bremse (22), die eingerichtet ist, eine Bewegung dieser Achse (A3) zumindest zu verringern aufweist, und **dadurch gekennzeichnet, dass** der Roboter (1) einen dieser Achse (A3) zugeordneten Drehmoment-Sensor (24) aufweist, der eingerichtet ist, das auf diese Achse (A3) wirkende Drehmoment zu ermitteln,
- Aktivieren der Bremse (22),
- Ermitteln des auf die Achse (A3) wirkenden Drehmoments mittels des Drehmoment-Sensors (24) bei aktivierter Bremse (22) und
- Beurteilen der Funktionstüchtigkeit der Bremse (22) aufgrund eines Auswertens des mittels des Drehmoment-Sensors (24) ermittelten Drehmoments.

2. Verfahren nach Anspruch 1, aufweisend Vergleichen des mittels des Drehmoment-Sensors (24) ermittelten Drehmoments mit einem Soll-Drehmoment und/oder Betreiben des Roboters (1) in einem vorgegebenen Betriebszustand vor dem Aktivieren der Bremse (22).

3. Verfahren nach Anspruch 1 oder 2, aufweisend Betreiben des Roboters (1) in einem gesteuerten oder geregelten Betriebszustand, wobei aufgrund des vorgegeben Betriebszustands die Achse (A3) eine vorgegebene Position aufweist, sich mit einer vorgegebenen Geschwindigkeit bewegt oder sich entlang einer vorgegebenen Trajektorie bewegt.

4. Verfahren nach Anspruch 3, aufweisend Abschalten des Antriebs (21) oder Einstellen eines vorbestimmten vom Antrieb (21) aufzubringenden Antrieb-Drehmoments.

5. Verfahren nach Anspruch 1 oder 2, aufweisend
- mechanisches Verhindern eines Bewegens der Achse (A3) mit Mitteln (25, 26, 27) unabhängig von der Bremse (22),
- Aktivieren der Bremse (22),
- Erzeugen eines Antrieb-Drehmoments mittels des Antriebs (21) größer als ein von der Bremse (22) aufzubringendes Brems-Drehmoment und
- Beurteilen der Funktionstüchtigkeit der Bremse (22) durch Auswerten des mittels des Drehmoment-Sensors (24) ermittelten Drehmoments und des Antrieb-Drehmoments.

6. Verfahren nach Anspruch 5, aufweisend Bewegen der Achse (A3) in einen für die Achse (A3) vorgesehenen mechanischen Endanschlag (25), so dass der Antrieb (21) die Achse (A3) nicht weiter bewegen kann.

7. Verfahren nach Anspruch 5, aufweisend, als das mechanische Verhindern eines Bewegens der Achse (A3) mit Mitteln (26, 27) unabhängig von der Bremse (22), Arretieren der Achse (A3).

8. Verfahren nach Anspruch 1 oder 2, aufweisend
- Aktivieren der Bremse (22) während eines Stillstands der Achse (A3),
- Erhöhen des vom Antrieb (21) aufzubringenden Antrieb-Drehmoments bis zu einem vorgegebene Antrieb-Drehmoment und
- Erkennen, dass die Bremse (22) funktionsuntüchtig ist, wenn vor Erreichen des vorgegebenen Antrieb-Drehmoments der Drehmoment-Sensor (24) eine Änderung des Drehmoments erkennt.

9. Verfahren nach Anspruch 8, aufweisend
- weiteres Erhöhen des vom Antrieb (21) aufzubringenden Antrieb-Drehmoments nachdem der Antrieb (21) das vorgegebene Antrieb-Drehmoment erreicht hat und
- Ermitteln eines Beschleunigungsmoments aufgrund des mittels des Drehmoment-Sensors (24) ermittelten Drehmoments der Achse (A3).

## Claims

1. Method for testing a brake of a robot, comprising:
- operating a robot (1) having a plurality of axes (A1-A6), wherein the robot (1) comprises a drive (21) assigned to one of the axes (A3) of the plurality of axes (A1-A6), a brake (22) assigned to said axis (A3), which is set up to at least reduce a movement of said axis (A3), and **characterised in that** the robot (1) comprises a torque sensor (24) assigned to said axis (A3) which is set up to determine the torque acting on said axis (A3),
- activating the brake (22),
- determining the torque acting on the axis (A3) by means of the torque sensor (24) with an activated brake (22) and
- assessing the functionality of the brake (22) on the basis of an evaluation of the torque determined by means of the torque sensor (24).

2. Method according to claim 1, comprising comparing the torque determined by means of the torque sensor (24) with a reference torque and/or operating the robot (1) in a predetermined operating state prior to activating the brake (22).

3. Method according to claim 1 or 2, comprising operating the robot (1) in a controlled or feedback controlled operating state, wherein on the basis of the predefined operating state the axis (A3) has a predefined position, moves at a predefined speed or moves along a predefined trajectory.

4. Method according to claim 3, comprising turning off the drive (21) or setting a predetermined drive torque to be applied by the drive (21).

5. Method according to claim 1 or 2, comprising,
- mechanically preventing a movement of the axis (A3) by means (25, 26, 27) independent of the brake (22),
- activating the brake (22),
- generating a drive torque by means of the drive (21) greater than a brake torque to be applied by the brake (22) and
- assessing the functionality of the brake (22) by evaluating the torque determined by means of the torque sensor (24) and the drive torque.

6. Method according to claim 5, comprising moving the axis (A3) into a mechanical end stop (25) provided for the axis (A3), so that the drive (21) cannot move the axis (A3) further.

7. Method according to claim 5, comprising arresting the axis (A3) as mechanically preventing a movement of the axis (A3) by means (26, 27) independent of the brake (22).

8. Method according to claim 1 or 2 comprising:
- activating the brake (22) during a standstill of the axis (A3),
- increasing the drive torque to be applied by the drive (21) up to a predetermined drive torque and
- recognising that the brake (22) is non-functional, if before reaching the predefined drive torque the torque sensor (24) recognises a change of the torque.

9. Method according to claim 8 comprising,
- additionally increasing the drive torque to be applied by the drive (21) once the drive (21) has reached the predetermined drive torque and
- determining an acceleration torque from the torque of the axis (A3) determined by means of the torque sensor (24).

## Revendications

1. Procédé pour vérifier un frein d'un robot, présentant les étapes suivantes :
- on fait fonctionner un robot (1) présentant une multitude d'axes (A1-A6), le robot (1) présentant un entraînement (21) associé à l'un des axes (A3) de la multitude d'axes (A1-A6), un frein (22) associé à cet Axe (A3), qui est prévu pour réduire au moins un mouvement de cet axe (A3), et **caractérisé en ce que** le robot (1) présente un capteur de couple (24) associé à cet axe (A3), qui est prévu pour déterminer un couple agissant sur cet axe (A3),
- on active le frein (22),
- on détermine le couple agissant sur l'axe (A3) au moyen du capteur de couple (24) lorsque le frein (22) est activé, et
- on analyse le bon fonctionnement du frein (22) sur la base d'une évaluation du couple déterminé au moyen du capteur de couple (24).

2. Procédé selon la revendication 1, présentant une comparaison du couple déterminé au moyen du capteur de couple (24) avec un couple de consigne et/ou un fonctionnement du robot (1) dans un état de fonctionnement prédéterminé avant d'activer le frein (22).

3. Procédé selon la revendication 1 ou 2, présentant le fonctionnement du robot (1) dans un état de fonctionnement fonctionné ou réglé, l'axe (A3) présentant, sur la base de l'état de fonctionnement prédéterminé, une position prédéterminée, se déplace avec une vitesse prédéterminée ou se déplace le long d'une trajectoire prédéterminée.

4. Procédé selon la revendication 3, présentant l'arrêt de l'entraînement (21) ou le réglage d'un couple d'entraînement déterminé qui doit être appliqué par l'entraînement (21).

5. Procédé selon la revendication 1 ou 4, présentant les étapes suivantes :
- on empêche de manière mécanique un mouvement de l'axe (A3) par des moyens (25, 26, 27) qui sont indépendants du frein (22),
- on active le frein (22),
- on engendre, au moyen de l'entraînement (21), un couple d'entraînement qui est plus grand que le couple de freinage qui doit être entraîné par le frein (22), et
- on analyse le bon fonctionnement du frein (22) par l'évaluation du couple déterminé au moyen du capteur de couple (24) et du couple d'entraînement.

6. Procédé selon la revendication 5, présentant le déplacement de l'axe (A3) dans une butée de fin de course (25) mécanique prévue pour l'axe (A3), de telle sorte que l'entraînement (21) ne peut pas déplacer plus loin l'axe (A3).

7. Procédé selon la revendication 5, présentant l'arrêt de l'axe (A3) en tant qu'empêchement mécanique d'un mouvement de l'axe (A3) avec des moyens (26, 27), indépendamment du frein (22).

8. Procédé selon la revendication 1 ou 2, présentant les étapes suivantes :
- on active le frein (22) pendant un arrêt de l'axe (A3),
- on augmente le couple d'entraînement qui doit être appliqué par l'entraînement (21) jusqu'à un couple d'entraînement prédéterminé, et
- on détecte que le frein (22) ne peut pas fonctionner si, avant d'avoir atteint le couple d'entraînement prédéterminé, le capteur de couple (24) détecte une modification du couple.

9. Procédé selon la revendication 8, présentant les étapes suivantes :
- on augmente encore le couple d'entraînement qui doit être appliqué par l'entraînement (21) après que l'entraînement (21) a atteint le couple d'entraînement prédéterminé, et
- on détermine un couple d'accélération sur la base du couple de rotation de l'axe (A3) déterminé au moyen du capteur de couple (24).
